# DEMANDE DE BREVET EUROPEEN

(11) **EP 1 881 593 A2**
(43) Date de publication de la demande: **23.01.2008**
(21) Numéro de dépôt: 07112289.9
(22) Date de dépôt: 11.07.2007
(51) Int. Cl.: H02P 6/18

(54) **Procédé de gestion de transitions dans un moteur BDLC à trois phases et dispositif correspondant**

(30) Priorité: 20.07.2006 FR 0606702
(71) Demandeur: ATMEL NANTES SA, 44306 Nantes Cédex 3 (FR)
(72) Inventeur: Tinlot, Eric, 44390 Petit-Mars (FR)
(74) Mandataire: Guéné, Patrick Lucien Juan Joseph

(57) **Abrégé**

L'invention concerne un procédé de gestion d'au moins une transition dans un moteur BDLC à trois phases décrivant un cycle comprenant six états successifs, ledit moteur comprenant des moyens d'obtention de premier, second et troisième signaux de synchronisation, lesdits signaux de synchronisation étant respectivement associés à des première, seconde et troisième bobines dudit moteur.

Selon l'invention, un tel procédé comprend les étapes suivantes pour chaque transition courante (611) associée au passage du moteur d'un état courant, à un état suivant :
- sélection d'un signal de synchronisation courant, sur lequel doit apparaître ladite transition courante ;
- détection de l'occurrence de ladite transition courante sur ledit signal de synchronisation courant ;
- envoi, audit moteur, d'au moins un signal de commande courant afin de commuter le moteur de l'état courant à l'état suivant.

## Description

### 1. Domaine de l'invention

Le domaine de l'invention est celui des moteurs électriques et plus particulièrement des moteurs électriques de type à courant continu et sans balais (appelés en anglais « brushless DC motor » ou « BLDC motor »).

Plus précisément, l'invention concerne les techniques de commande de tels moteur électriques.

### 2. Solutions de l'art antérieur

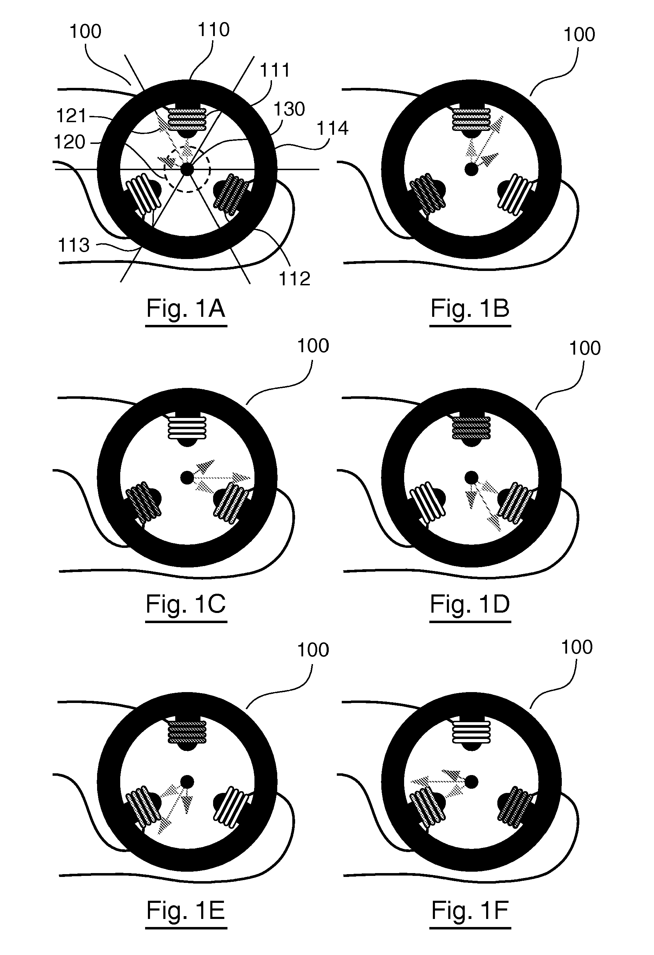

On présente, en relation avec les ***figures 1A à 1F,*** des schémas illustrant les six états principaux dans lesquels peut se trouver un moteur électrique à courant continu et sans balais (ci-après désigné par moteur BLDC) à trois phases.

Le moteur BLDC à trois phases 100 comprend :
- un stator 110 comprenant lui-même des première 111, seconde 112 et troisième 113 bobines solidarisées sur un châssis 114 ;
- un rotor 120 dont les directions d'aimantation sont représentées par les flèches 121.

Un circuit de contrôle comprenant un circuit de commande et un circuit de puissance (non représentés) permet de faire fonctionner le moteur.

Ainsi, tel qu'illustré successivement par les figures 1A à 1F, le rotor 120 est animé d'un mouvement rotatif autour d'un axe 130 qui fait prendre successivement au moteur les six états des figures 1A à 1F, alors que le stator reste immobile. Ce mouvement rotatif est initié et entretenu par des champs magnétiques générés successivement dans les trois bobines, la génération de ces champs étant commandée par des signaux de commande émis par le circuit de commande.

La commutation d'un état courant du moteur 100 à un état suivant se fait donc par envoi, à chaque bobine du moteur, de deux signaux de commande, par l'intermédiaire du circuit de puissance, les signaux de commande étant fonction de la position du rotor par rapport aux bobines du stator (c'est-à-dire de l'état dans lequel est le moteur).

Afin de déterminer quels signaux de commande il faut envoyer, on met en oeuvre classiquement, dans le cadre des moteurs BDLC à trois phases, soit des capteurs à effet Hall, soit un circuit d'obtention de signaux de synchronisation (faisant partie du circuit de contrôle).

En effet, les signaux issus des capteurs ou du circuit d'obtention de signaux de synchronisation permettent d'avoir accès aux informations suivantes :
- quand il est nécessaire de commuter le moteur d'un état à un autre état (transition) par envoi de signaux de commande adaptés ;
- quels signaux de commande doivent être envoyés aux bobines du moteur (ce qui revient à connaître dans quel état doit passer le moteur).

On suppose dans la suite que le moteur 100 de la figure 1 est un moteur sans capteur, c'est-à-dire qui met en oeuvre un circuit d'obtention de signaux de synchronisation. Les signaux de synchronisation sont obtenus à partir de la mesure de forces contre-électromotrices générées au sein du moteur.

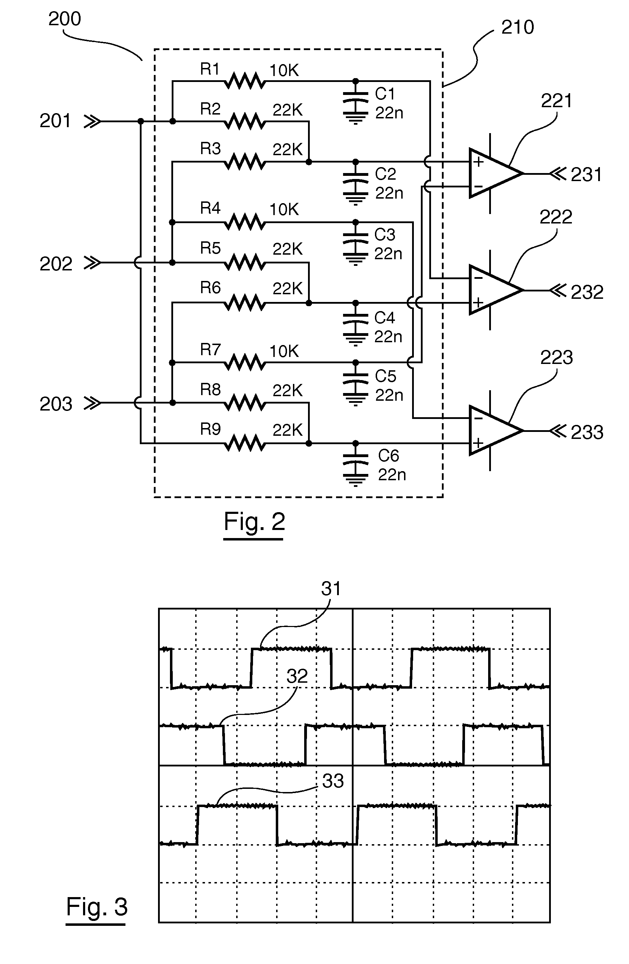

On illustre, en relation avec la ***figure 2,*** un exemple de circuit 200 d'obtention des signaux de synchronisation du moteur 100 précité (par exemple le module commercialisé par la société ATMEL sous la référence AT90PWM3).

Le circuit 200 d'obtention des signaux de synchronisation comprend des première 201, seconde 202 et troisième 203 entrées alimentées par des signaux provenant respectivement des première, seconde et troisième bobines du moteur.

Il comprend également un étage de filtrage 210 comprenant des filtres passe-bas qui permettent de filtrer les signaux de commande des bobines et d'éventuels signaux parasites de haute fréquence.

Il comprend ensuite des premier 221, second 222 et troisième 223 comparateurs qui comparent respectivement :
- le troisième signal d'entrée 203 et le point milieu des premier 201 et second 202 signaux d'entrée une fois filtrés par l'étage de filtrage 210 ;
- le premier signal d'entrée 201 et le point milieu des troisième 203 et second 202 signaux d'entrée une fois filtrés par l'étage de filtrage 210 ;
- le second signal d'entrée 202 et le point milieu des premier 201 et troisième 203 signaux d'entrée une fois filtrés par l'étage de filtrage 210.

Les sorties des premier 221, second 222 et troisième 223 comparateurs constituent respectivement des première 231, seconde 232 et troisième 233 sorties du circuit 200 sur lesquelles sont délivrées respectivement des premier, second et troisième signaux de synchronisation.

Le circuit 200 d'obtention des signaux de synchronisation est couramment utilisé pour synthétiser des signaux de synchronisation équivalents à ceux des moteurs BDLC à trois phases équipés de capteurs à effet Hall.

On présente, en relation avec la ***figure 3**,* des premier 31, second 32 et troisième 33 signaux de synchronisation théoriques issus du circuit 200 en fonction du temps.

Ainsi, en lisant la valeur des trois signaux de synchronisation et connaissant le sens de rotation du moteur, il est possible, lors d'une transition (repérée par un front montant ou un front descendant au niveau de l'un des signaux de synchronisation), de déterminer dans quel état doit passer le moteur et donc quels signaux de commande lui envoyer.

En effet, le traitement standard des transitions (mis en oeuvre par le circuit de commande classique) comprend les étapes suivantes :
- surveillance de l'occurrence de transitions, chacune étant repérée par un front montant ou un front descendant, sur chacun des trois signaux de synchronisation ;
- détection d'un front (représentatif d'une transition) sur un des signaux de synchronisation ;
- lors de la détection de la transition, lecture de l'état courant de chacun des trois signaux de synchronisation afin de déterminer (connaissant le sens de rotation du moteur) la position du rotor par rapport au stator et donc quelle sont les valeurs des signaux de commande à envoyer aux bobines du moteur ;
- envoi des signaux de commande appropriés aux bobines du moteur afin de commuter le moteur de l'état courant à l'état suivant;
- éventuellement, masquage, pendant une petite zone de temps juste après l'envoi des signaux de commande (pour éviter les interférences liées à la commutation en cours), des signaux de synchronisation.

Un problème de ce mode de traitement des transitions est lié au fait que les signaux de synchronisation sont parasités (ou perturbés) :
- d'une part, par la fréquence de hachage des commandes de type PWM (pour « Pulse Width Modulation » ou « modulation de largeur d'impulsion ») ;
- d'autre part, par les pics de courant et/ou de démagnétisation associés à l'effet des commandes notamment sur les bobines du moteur.

En effet, si le parasitage des signaux de synchronisation lié à la fréquence de hachage peut être limité par l'étage de filtrage 210 du circuit 200, les pics de courant et/ou de démagnétisation des bobines sont quasiment impossible à filtrer.

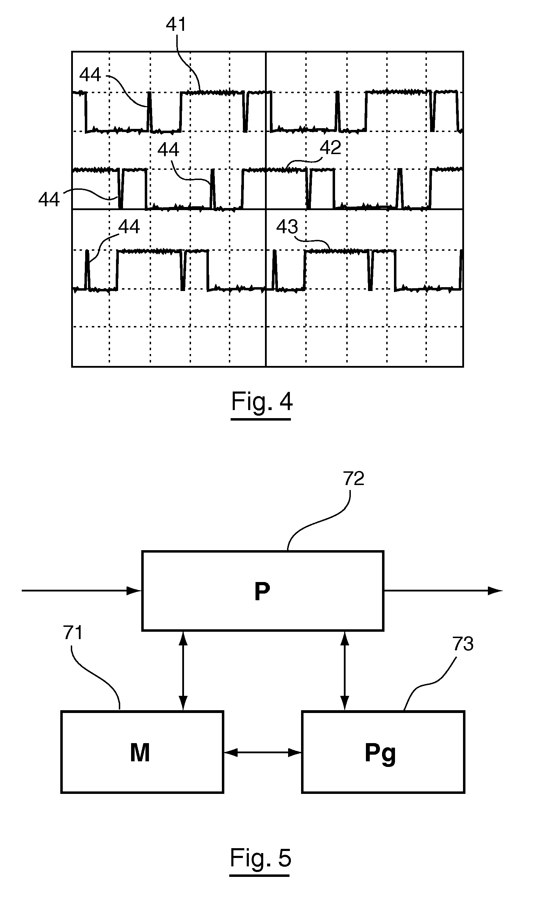

Tel qu'illustré par la ***figure 4*** (qui présente des premier 41, second 42 et troisième 43 signaux de synchronisation réels issus du circuit 200 en fonction du temps), ces pics de courant et/ou de démagnétisation perturbent les signaux de synchronisation générés. En effet, ce parasitage des signaux de synchronisation se caractérise par l'apparition de pics parasites 44 qui entraînent notamment des détections de transitions erronées et/ou des déterminations de signaux de commandes erronées.

Les pics parasites 44 dépendent des paramètres électriques (notamment la résistance et l'inductance) du moteur et peuvent être présents dans chacun des états du moteur.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir une technique de traitement des transitions pour un moteur BLDC à trois phases utilisant un circuit d'obtention de signaux de synchronisation qui permette de réduire de manière importante les problèmes liés au parasitage des signaux de synchronisation.

Un autre objectif de l'invention, dans au moins un de ses modes de réalisation, est de mettre en oeuvre une telle technique qui permette notamment d'éviter des détections erronées de transitions ou des déterminations de signaux de commandes erronées.

L'invention, dans au moins un de ses modes de réalisation, a encore pour objectif de fournir une telle technique qui soit simple à mettre en oeuvre et pour un faible coût.

### 4. Exposé de l'invention

Conformément à un mode de réalisation particulier, l'invention concerne un Procédé de gestion d'au moins une transition dans un moteur BDLC à trois phases décrivant un cycle comprenant six états successifs, ledit moteur comprenant des moyens d'obtention de premier, second et troisième signaux de synchronisation, lesdits signaux de synchronisation étant respectivement associés à des première, seconde et troisième bobines dudit moteur.

Selon l'invention, le procédé comprend les étapes suivantes, pour chaque transition courante associée au passage du moteur d'un état courant, à un état suivant :
- sélection d'un signal de synchronisation courant, sur lequel doit apparaître ladite transition courante ;
- détection de l'occurrence de ladite transition courante sur ledit signal de synchronisation courant ;
- envoi, audit moteur, d'au moins un signal de commande courant afin de commuter le moteur de l'état courant à l'état suivant.

Le principe général de l'invention repose sur une utilisation minimale de l'information contenue dans les signaux de synchronisation grâce à une prévision de l'occurrence des transitions à partir de la vitesse de rotation du moteur et de son sens de rotation.

En effet, à partir de la vitesse de rotation du moteur et de son sens de rotation, on peut calculer au préalable quand et sur quels signaux de synchronisation doivent se produirent les fronts montants ou descendants (représentatifs des transitions), et également déterminer au préalable pour chacune des transitions, quels signaux de commande il faudra envoyer au moteur.

Ainsi, le procédé de gestion selon l'invention permet de ne pas mettre en oeuvre l'étape classique de lecture des signaux de synchronisation (afin de déterminer les signaux de commande à envoyer au moteur à un instant donné) et ainsi d'éviter des erreurs d'interprétation des signaux de synchronisation (conduisant à des signaux de commandes erronées) liées à la présence des pics parasites.

D'autre part, ce procédé permet (en ne mettant en oeuvre que la surveillance du signal de synchronisation sur lequel doit avoir lieu le front représentatif de la transition) de réduire l'occurrence de détections erronées de transitions liées à la présence des pics parasites, du fait que l'on ne surveille pas les autres signaux de synchronisation.

Préférentiellement, l'étape de détection est précédée d'une étape d'identification d'une information représentative de la transition courante.

Ainsi, grâce à la connaissance précise de l'information représentative de la transition, il est possible de filtrer toute autre information qui pourrait être interprétée, de manière erronée, comme étant l'information représentative de la transition.

Selon une caractéristique avantageuse de l'invention, ladite information représentative de la transition courante appartient au groupe comprenant :
- les fronts montants du signal de synchronisation courant ;
- les fronts descendants du signal de synchronisation courant.

Préférentiellement, le procédé selon l'invention comprend une étape préalable de détermination, pour chacune des transitions d'une plage temporelle prédéterminée dans laquelle est mise en oeuvre ladite étape de détection de l'occurrence de ladite la transition courante.

Selon un mode de mise en oeuvre de l'invention, l'étape de détermination tient compte d'au moins l'un des paramètres appartenant au groupe comprenant :
- la vitesse de rotation du moteur ;
- le sens de rotation du moteur.

Avantageusement, le procédé selon l'invention comprend en outre une étape de masquage du signal de synchronisation courant, ledit masquage étant effectué après l'occurrence de ladite transition courante, pendant l'écoulement d'une temporisation donnée.

Ainsi, grâce à la mise en oeuvre de ce masquage, sur le signal de synchronisation surveillé, lors des périodes où aucune transition ne doit se produire, on réduit également l'occurrence de détections erronées de transitions liées à la présence des pics parasites.

Par ailleurs, c'est grâce à la prévision de l'occurrence des transitions, cette étape de masquage peut être mise en oeuvre pendant toute la période s'étendant entre la transition courante et la transition suivante.

Avantageusement, la durée de la temporisation est calculée dynamiquement en fonction de la vitesse de rotation du moteur.

Préférentiellement, le procédé de gestion selon l'invention comprend une étape de génération dudit au moins un signal de commande courant à partir de ladite transition courante, de la vitesse de rotation du moteur et du sens de rotation du moteur.

L'invention concerne également un dispositif de gestion d'au moins une transition dans un moteur BDLC à trois phases décrivant un cycle comprenant six états successifs, ledit moteur comprenant des moyens d'obtention de premier, second et troisième signaux de synchronisation, lesdits signaux de synchronisation étant respectivement associés à des première, seconde et troisième bobines dudit moteur,
ledit procédé comprenant, pour chaque transition courante associée au passage du moteur d'un état courant à un état suivant :
- des moyens de sélection d'un signal de synchronisation courant, sur lequel doit apparaître ladite transition courante ;
- des moyens de détection de l'occurrence de ladite transition courante sur ledit signal de synchronisation courant ;
- des moyens d'envoi, audit moteur, d'au moins un signal de commande courant afin de commuter le moteur de l'état courant à l'état suivant.

L'invention concerne également un produit programme d'ordinateur, téléchargeable depuis un réseau de communication et/ou enregistré sur un support lisible par ordinateur et/ou exécutable par un processeur, caractérisé en ce qu'il comprend des instructions de code de programme pour la mise en oeuvre du procédé de gestion d'au moins une transition tel que précédemment décrit.

Les avantages du dispositif gestion et du produit programme d'ordinateur sont les mêmes que ceux du procédé de gestion, ils ne sont pas détaillées plus amplement.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1A à 1F présentent des schémas illustrant les six états principaux dans lesquels peut se trouver un moteur électrique BLDC à trois phases classique ;
- la figure 2 illustre un exemple de circuit d'obtention des signaux de synchronisation du moteur BDLC à trois phases de la figure 1 ;
- la figure 3 présente des graphiques théoriques des premier, second et troisième signaux de synchronisation en fonction du temps, issus du circuit de la figure 2 ;
- la figure 4 présente des graphiques réels des premier, second et troisième signaux de synchronisation en fonction du temps, issus du circuit de la figure 2 ;
- la figure 5 présente la structure simplifiée d'un circuit de gestion de transitions selon un mode particulier de réalisation de l'invention ;
- la figure 6 présente un graphique illustrant l'évolution temporelle des premier, second et troisième signaux de synchronisation ainsi que la mise en oeuvre du procédé de gestion selon un mode de réalisation particulier de l'invention ;
- la figure 7 présente un diagramme des étapes du procédé de gestion, selon le mode de réalisation particulier de l'invention, mises en oeuvre lors d'un demi-cycle du moteur.

### 6. Description d'un mode de réalisation de l'invention

On se place dans la suite, selon un mode de réalisation particulier de l'invention, dans le cadre du moteur BDLC à trois phases 100 de la figure 1 comprenant un circuit de contrôle du moteur, lui-même comprenant un circuit de gestion de transitions selon l'invention (qui est par exemple le module commercialisé par la société ATMEL sous la référence AT90PWN3 ci-après décrit en relation avec la figure 5), le circuit d'obtention des signaux de synchronisation de la figure 2 et un circuit de puissance permettant l'alimentation des bobines du moteur. On suppose que sont connus le sens de rotation du moteur et sa vitesse de rotation.

Ainsi dans le cadre de l'invention, le circuit de gestion de transitions remplace le circuit de commande classique précité.

Le procédé de gestion des transitions (mis en oeuvre par le dispositif de gestion de transition selon l'invention) selon un mode de mise en oeuvre de l'invention comprend une étape préalable de détermination (en fonction des vitesse de rotation du moteur et sens de rotation du moteur), pour chacune des transitions :
- d'une plage temporelle dans laquelle est située un front (montant ou descendant) représentatif de la transition (ou information représentative de la transition) ;
- du signal de synchronisation sur lequel est situé le front représentatif de la transition.

Et, pour chacune des transitions et notamment pour une transition courante associée au passage du moteur d'un premier état, dit état courant, à un second état, il comprend également les étapes suivantes :
- sélection d'un signal de synchronisation, dit signal de synchronisation courant, sur lequel doit apparaître le front représentatif de la transition courante ;
- surveillance du signal de synchronisation courant afin de détecter le front ;
- lors de la détection du front, détermination de la position du rotor par rapport au stator et donc quelle sont les valeurs des signaux de commande à envoyer sur les bobines du moteur afin de faire passer le moteur du premier au second état ;
- génération des signaux de commande courants à partir de la connaissance du front, de la vitesse de rotation du moteur et du sens de rotation du moteur ;
- envoi des signaux de commande aux bobines du moteur afin de commuter le moteur de l'état courant à l'état suivant.

Par exemple, le procédé selon l'invention comprend également une étape de détermination, à partir de la connaissance de l'état du moteur (obtenu lors de la transition précédente), du fait que le front représentatif de la transition courante est un front montant ou un front descendant.

Ainsi, cela permet de réduire le risque de détection erronée du front.

Dans le cadre d'une implémentation logicielle de l'invention, les transitions peuvent être implémentées sous la forme d'interruptions.

Selon un mode de réalisation particulier de l'invention, le procédé de gestion comprend également une étape de masquage du signal de synchronisation courant, mise en oeuvre juste après la transition courante. Ce masquage est effectué pendant l'écoulement d'une temporisation donnée.

Par exemple la durée de la temporisation est calculée dynamiquement en fonction de la vitesse de rotation du moteur.

La durée de la temporisation peut être accordée en fonction de la vitesse de rotation du moteur au moyen par exemple d'un circuit de mesure de la vitesse de rotation.

Le procédé de gestion est mis en oeuvre par le circuit de gestion de transitions précité.

On présente, en relation avec la ***figure 5,*** la structure simplifiée d'un circuit (ou dispositif) de gestion des transitions dans un moteur BDLC à trois phases décrivant un cycle comprenant six états successifs, selon le mode particulier de réalisation de l'invention précité.

Comme illustré en figure 5, un tel circuit de gestion de transitions comprend une mémoire 71, une unité de traitement 72, équipée par exemple d'un microprocesseur µP, et pilotée par le programme d'ordinateur 73, mettant en oeuvre le procédé gestion de transitions selon l'invention.

A l'initialisation, les instructions de code du programme d'ordinateur 43 sont par exemple chargées dans une mémoire RAM avant d'être exécutées par le processeur de l'unité de traitement 72.

Le microprocesseur de l'unité de traitement 72 met en oeuvre les étapes du procédé gestion de transitions décrit précédemment, de façon à entraîner en rotation le moteur.

Pour ce faire, le circuit de gestion de transitions:
- reçoit les signaux de synchronisation du circuit d'obtention des signaux de synchronisation et
- comprend, pour chaque transition courante associée au passage du moteur d'un état courant à un état suivant :
   o des moyens de sélection d'un signal de synchronisation courant, sur lequel doit apparaître ladite transition courante ;
   o des moyens de détection de l'occurrence de ladite transition courante sur ledit signal de synchronisation courant ;
   o des moyens d'envoi, au moteur, de signaux de commande courants (signaux de commande que le circuit de gestion de transitions génère) afin de commuter le moteur de l'état courant à l'état suivant.

Ces moyens sont pilotés par le microprocesseur de l'unité de traitement 72.

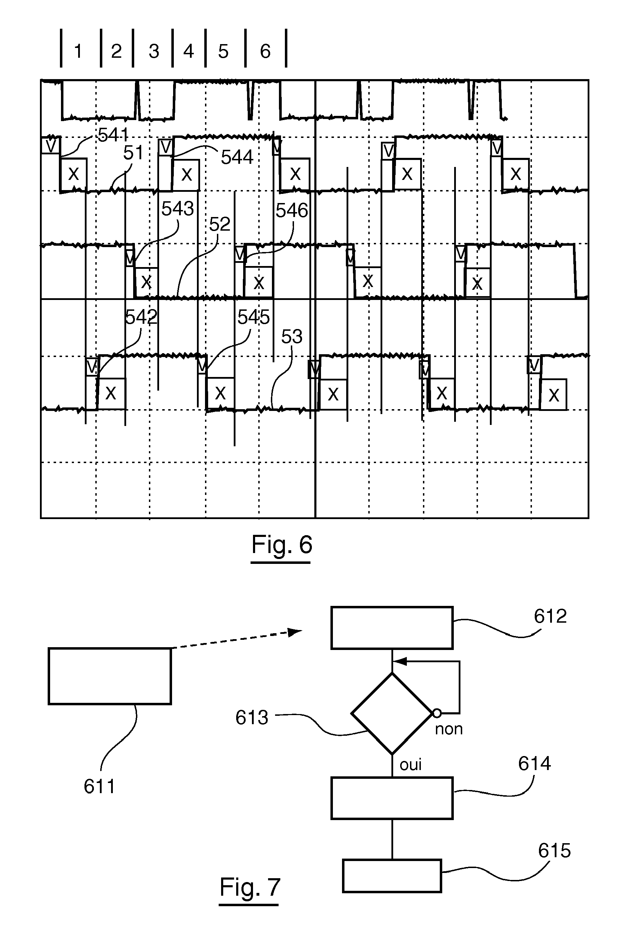

On présente, en relation avec la ***figure* 6,** un graphique illustrant l'évolution temporelle des premier 51, second 52 et troisième 53 signaux de synchronisation (obtenus par le circuit d'obtention des signaux de synchronisation) ainsi que la mise en oeuvre du procédé de gestion selon le mode de réalisation particulier de l'invention (mis en oeuvre par le circuit de gestion de transitions).

Sur cette figure 6, est représenté par un « v », les zones temporelles où la surveillance de l'occurrence d'une transition sur le signal de synchronisation courant est mise en oeuvre et, par un « x », les zones temporelles où la surveillance de l'occurrence d'une transition sur le signal de synchronisation courant n'est pas mise en oeuvre (c'est-à-dire que le signal de synchronisation courant est masqué du point de vue du circuit de gestion de transitions).

La temporisation pendant laquelle le signal de synchronisation courant est masqué (zone temporelle marquée par un « x ») est choisie de sorte qu'elle commence juste après le front représentatif de la transition courante et qu'elle finisse juste avant le front représentatif de la transition suivante.

Ainsi la période (zone temporelle marquée par un « v ») pendant laquelle le signal de synchronisation courant n'est pas masqué (c'est-à-dire que la surveillance de l'occurrence d'une transition est mise en oeuvre) correspond à une courte période juste avant le front représentatif de la transition courante.

Lors d'un cycle du moteur, il passe respectivement par les six états précités (figures 1A à 1F) :
- un front descendant 541 du premier signal de synchronisation est représentatif de la première transition correspondant à la commutation du sixième état (figure 1F) au premier état (figure 1A) du moteur 100 ;
- un front montant 542 du troisième signal de synchronisation est représentatif de la seconde transition correspondant à la commutation du premier état (figure 1A) au second état (figure 1B) ;
- un front descendant 543 du second signal de synchronisation est représentatif de la troisième transition correspondant à la commutation du second état (figure 1B) au troisième état figure 1C) ;
- un front montant 544 du premier signal de synchronisation est représentatif de la quatrième transition correspondant à la commutation du troisième état (figure 1C) au quatrième état (figure 1D) ;
- un front descendant 545 du troisième signal de synchronisation est représentatif de la cinquième transition correspondant à la commutation du quatrième état (figure 1D) au cinquième état (figure 1E) ;
- un front montant 546 du second signal de synchronisation est représentatif de la sixième transition correspondant à la commutation du cinquième état (figure 1E) au sixième état (figure 1F).

On présente, en relation avec la ***figure** 7,* un diagramme des étapes du procédé de gestion, selon le mode de réalisation particulier de l'invention, mises en oeuvre par le circuit de gestion de transitions lors d'un demi-cycle du moteur.

Par exemple le demi-cycle dans lequel se produit les première, seconde et troisième transitions précitées (en relation avec la figure 6). Les mêmes étapes se produisent lors du demi-cycle dans lequel se produit les quatrième, cinquième et sixième transitions précitées.

On se place dans le cas où la vitesse de rotation du moteur est fixée et constante.

Dans une étape 611, une transition courante (respectivement la première, la seconde ou la troisième transition) du moteur 100 se produit.

Ensuite :
- la surveillance de l'occurrence de la transition courante sur le signal de synchronisation courant est désactivé ;
- la valeur du signal de synchronisation courant est relevée ;
- le signal de synchronisation suivant (sur lequel le front repérant la transition suivante doit se produire) est sélectionné à partir de la valeur du signal de synchronisation courant, de la vitesse et du sens de rotation du moteur ;
- un algorithme de surveillance de transitions (décrit ci-après) est mis en oeuvre.

Dans une étape 612, dans le cadre de l'initialisation de l'algorithme de surveillance de transitions, une temporisation courante est mise en oeuvre entre la fin de la transition courante et le début de la transition suivante.

Dans une étape 613, le procédé vérifie si la temporisation courante est écoulée.

Si la temporisation courante est écoulée, dans une étape 614, le procédé met en oeuvre une surveillance de l'occurrence de la transition suivante (respectivement la seconde, la troisième ou la quatrième transition) sur le signal de synchronisation suivant (respectivement sur le troisième, le second ou le premier signal de synchronisation).

Puis, dans une étape 616, il est mis fin à l'algorithme de surveillance de transitions avant que l'étape 611 ne soit remise en oeuvre.

Par contre, si la temporisation courante n'est pas écoulée lors de la vérification de l'étape 613, alors l'étape 613 est remise en oeuvre.

## Revendications

1. Procédé de gestion d'au moins une transition dans un moteur BDLC à trois phases (100) décrivant un cycle comprenant six états successifs, ledit moteur comprenant des moyens d'obtention (200) de premier, second et troisième signaux de synchronisation, lesdits signaux de synchronisation étant respectivement associés à des première (111), seconde (112) et troisième (113) bobines dudit moteur,
**caractérisé en ce que**, pour chaque transition courante (611) associée au passage du moteur d'un état courant, à un état suivant, il comprend les étapes suivantes :
- sélection d'un signal de synchronisation courant, sur lequel doit apparaître ladite transition courante (611) ;
- surveillance du signal de synchronisation courant mais pas des autres signaux de synchronisation ;
- détection de l'occurrence de ladite transition courante sur ledit signal de synchronisation courant ;
- envoi, audit moteur, d'au moins un signal de commande courant afin de commuter le moteur de l'état courant à l'état suivant,
et **en ce qu'**il comprend en outre une étape de détermination, pour chaque transition courante, d'une plage temporelle prédéterminée (v) dans laquelle est mise en oeuvre ladite étape de détection de l'occurrence de ladite transition courante.

2. Procédé selon la revendication 1, **caractérisé en ce que** l'étape de détection est précédée d'une étape d'identification d'une information représentative de la transition courante.

3. Procédé selon l'une quelconque des revendications 1 et 2, **caractérisé en ce que** ladite information représentative de la transition courante appartient au groupe comprenant :
- les fronts montants (542, 544, 546) du signal de synchronisation courant ;
- les fronts descendants (541, 543, 545) du signal de synchronisation courant.

4. Procédé selon l'une quelconque des revendications 1 à 3, **caractérisé en ce que** ladite étape de détermination tient compte d'au moins l'un des paramètres appartenant au groupe comprenant :
- la vitesse de rotation du moteur ;
- le sens de rotation du moteur.

5. Procédé selon l'une quelconque des revendications 1 à 4, **caractérisé en ce qu'**il comprend en outre une étape de masquage du signal de synchronisation courant, ledit masquage (x) étant effectué après l'occurrence de ladite transition courante, pendant l'écoulement d'une temporisation donnée.

6. Procédé selon la revendication 5, **caractérisé en ce que** la durée de la temporisation est calculée dynamiquement en fonction de la vitesse de rotation du moteur.

7. Procédé selon l'une quelconque des revendications 1 à 6, **caractérisé en ce qu'**il comprend une étape de génération dudit au moins un signal de commande courant à partir de ladite transition courante, de la vitesse de rotation du moteur et du sens de rotation du moteur.

8. Dispositif de gestion d'au moins une transition dans un moteur BDLC à trois phases (100) décrivant un cycle comprenant six états successifs, ledit moteur comprenant des moyens d'obtention (200) de premier, second et troisième signaux de synchronisation, lesdits signaux de synchronisation étant respectivement associés à des première (111), seconde (112) et troisième (113) bobines dudit moteur,
**caractérisé en ce qu'**il comprend, pour chaque transition courante associée au passage du moteur d'un état courant à un état suivant :
- des moyens de sélection d'un signal de synchronisation courant, sur lequel doit apparaître ladite transition courante ;
- des moyens de surveillance du signal de synchronisation courant mais pas des autres signaux de synchronisation ;
- des moyens de détection de l'occurrence de ladite transition courante sur ledit signal de synchronisation courant ;
- des moyens d'envoi, audit moteur, d'au moins un signal de commande courant afin de commuter le moteur de l'état courant à l'état suivant,
et **en ce qu'**il comprend des moyens de détermination, pour chaque transition courante, d'une plage temporelle prédéterminée (v) dans laquelle sont activés les moyens de détection de l'occurrence de ladite transition courante.

9. Produit programme d'ordinateur, téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de gestion d'au moins une transition selon l'une au moins des revendications 1 à 7.
